# EUROPEAN PATENT APPLICATION

(11) **EP 4 674 892 A1**
(43) Date of publication of application: **07.01.2026**
(21) Application number: 24186594.8
(22) Date of filing: 04.07.2024
(51) Int. Cl.: C08G 75/02, C08G 75/045

(54) **COMPOSITIONS COMPRISING THIOL GROUP CONTAINING POLY(ETHER-THIOETHER) SPECIES, THEIR PREPARATION AND SEALANTS THEREOF**

(71) Applicant: Chemetall GmbH, 60487 Frankfurt (DE)
(72) Inventor: SICHMELLER, Christopher Anthony, Wyandotte, Michigan 48192 (US); HUSSAIN, Mahmud, Southfield, Michigan 48033-2442 (US)
(74) Representative: Steffan & Kiehne Patentanwälte PartG mbB

(57) **Abstract**

The invention relates to a composition comprising thiol group containing poly(ether-thioether) species having the general structure

[H(S-R¹)ₚ-S-(CH₂)ᵣ-O]ₘ-R²-O-[R³-(S)ₛ-R⁴-O]-[R⁵-O]ₙ-R⁶ (Ia)

or being an R¹-linked dimer thereof, wherein, R¹ is an aliphatic or aromatic divalent organic residue, R² is an aliphatic or aromatic (m+1)-valent organic residue, with m = 2 or 3, R³ and R⁴ are divalent residues (CHR^{a})ₜ with t = 2 to 4, wherein residues R^{a} are selected from H and hydrocarbyl groups comprising 1 to 12, y of the n residues R⁵ are branched divalent hydrocarbon residue comprising 4 to 20 carbon atoms, with y being ≥ 1; z of the n residues R⁵ are residues R³-(S)ₛ-R⁴, z being ≥ 1; with n = y + z; and n independently of each other being a number in the range from 2 to 200; R⁶ is H in case R⁵ is a branched divalent hydrocarbon residue comprising 4 to 20 carbon atoms, or R⁶ is H or R²-[O-(CH₂)ᵣ-S-R¹-SH]ₘ in case R⁵ being a residue R³-(S)ₛ-R⁴; and p = 0 or 1, r = 2 or 3, and s = 1 to 8. The invention further relates to a method of producing said polymers, an intermediate of said polymers and its production, sealing systems and sealants containing the inventive polymer, a method of sealing and a sealed substrate, as well as the use of the sealant in the aerospace and/or aircraft industry.

## Description

The present invention relates to a composition comprising thiol group containing poly(ether-thioether) species, a method for preparing the same, an intermediate used in said method and a method of producing the intermediate, a two-component (i.e., two-pack) sealing system comprising the thiol group containing poly(ether-thioether) species in one of its components, a sealant composition obtainable therefrom, as well as a method of sealing a substrate by making use of said sealant composition, a sealed substrate obtainable by this method and the use of the sealing compositions and sealants.

### BACKGROUND OF THE INVENTION

Sealants are used for a wide range of applications. They are, e.g., relevant to the aircraft and aerospace sector, but are also widely used in the automotive sector. Sealants are further used for sealing construction elements, connection of metal sheets, for example, to existing structures, such as segments of an airplane and/or for corrosion protection in places, where for example, in the region of holes, the corrosion protection layers of the metallic elements are damaged or removed. They may also exert a temporary carrying function, for example during transportation of structures to be mounted, which have to be subsequently provided with permanent supporting connection elements.

The use of polymeric thiols and their application within sealants such as aerospace and aircraft sealants are known in the prior art. There are a number of synthetic routes available for the preparation of such polymeric thiols.

The most prominent synthesis route for the synthesis of polythioethers is the thiol-ene click chemistry route, which makes use of bis-thioles and divinylethers as starting materials. Corresponding SH-terminated polythioethers bearing in particular sulfur-carbon-oxygen units, wherein more than one carbon atoms are present between the oxygen and sulfur atoms of the aforementioned units, in their polymer backbone and being obtainable via said thiol-ene click reaction are, e.g., disclosed in US 6,232,401 B1. For introduction of branches into the resulting polymers, triallyl cyanurate (TAC) can be used as crosslinker in the thiol-ene click reaction. However, the availability of suitable raw materials to be used for this route is limited and even if an availability is given, usually comparably high costs are involved. Hence, this route is disadvantageous at least for economic reasons.

Another synthetic route for the preparation of polymeric thiols is a reaction of suitable polythiols such as bis(thiols) and polyhalides such as bis(halides) in alkaline environments. The polymers disclosed in US 6,525,168 B2 and US 6,723,827 B2 are prepared via this route. However, polyhalides, in particular bis(halides) such as bis-chloroethyl formal, have a high hazard potential and/or are toxic and, hence, synthetic routes employing this starting material are undesired. In addition, when bis-chloroethyl formal is used, the resulting products are not stable against acidic conditions due to the presence of the formal group. For this reason, also, this route is disadvantageous.

A further process for preparing thioethers is disclosed in US 7,875,666B2 and US 8,466,220 B2: These patents describe their synthesis via reaction of sodium hydrosulfide (NaHS), NaOH and bis-chloroethyl formal CH₂(OCH₂CH₂Cl)₂. First, a corresponding bis-thiol CH₂(OCH₂CH₂SH)₂ is formed, which then further reacts with additional bis-chloroethyl formal CH₂(OCH₂CH₂Cl)₂. Again, chloroethyl formal is toxic and, hence, synthetic routes employing this starting material are undesired. Further, as mentioned above the resulting products are not stable against acidic conditions due to the presence of the formal group. Therefore, this route is disadvantageous as well.

EP 0 055 531 A1 describes a non-crystallizing water, solvent, fuel and temperature resistant linear, liquid polythioether containing no carbonyl groups and having the formula B-[O-CHR¹CHR²-S(XS)ₚCHR³CHR⁴]ₙO-B, wherein each of R¹, R², R³ and R⁴ is hydrogen or lower alkyl with the provision that a sufficient number of R¹, R², R³ and/or R⁴ are lower alkyl in said polymeric backbone to render said backbone non-crystallizing; X is a divalent organic radical selected from -CH₂-CH₂-, -CH₂-CH₂-CH₂-CH₂-, CH₂-CH₂-S-CH₂-CH₂-, or CH₂-CH₂-O-CH₂-CH₂-: n is 15 to 200, p is 0 or 1 and B is a terminating radical which does not substantially reduce the water, solvent and fuel resistance, said terminating radical being either a chemically non-reactive radical or a vulcanizable radical curable to an elastomeric sealant. Terminating radicals B comprising an at least trivalent residue allowing the introduction of at least two terminal groups on at least one end of the polymeric backbone are not described in EP 0 055 531 A1.

US 3,985,708 describes a vulcanizable elastomer composition comprising a copolymer which is a polycondensation product of thiodiglycol, a bisphenol, and an aliphatic diol. The aliphatic diol may optionally contain an external unsaturation, such as an allyl group extending from the backbone of the copolymer. Examples of such unsaturated aliphatic diols used in US 3,985,708 are the monoallyl ethers of trimethylolpropane and glycerol. An introduction of a diallyl or triallyl ethers of a monohydroxy compound, such as diallyl ethers of trimethylolpropane and glycerol as a terminal group is not disclosed.

Thus, methods for preparing polymeric thiols known in the prior art are not always satisfactory in all aspects. In most of the cases the yields are not always satisfactory. Further, in some cases the methods require a complex handling, require the use of high-price starting materials and/or make use of toxic or at least hazardous starting materials and/or chemicals, which is disadvantageous both from an ecological point of view and for safety reasons. In addition, not all products have a sufficient stability in particular under acidic conditions.

Thus, there is a need to provide a new method for preparing polymeric thiols, and compositions comprising the same, which does not have the disadvantages of the conventional methods. Further, the resulting compositions comprising the polymers obtainable ought to be suitable to be used in sealants, in particular for the aerospace and aircraft industry, and the resulting sealants should not show disadvantageous properties in particular with respect to water and fuel resistance and with respect to mechanical properties and, furthermore, should allow curing at a low temperature.

### SUMMARY

It has therefore been an aim of the present invention to provide a new method for preparing polymeric thiols, which is simple, easy to perform, comprises as few steps as possible, is safe, and both economically and ecologically advantageous and provides a composition comprising a new group of species of thiol group containing poly(ether-thioether)s. At the same time the obtained polymeric thiols should have a sufficient acid stability, allow curing at a low temperature when incorporated into sealant compositions and the sealant compositions should be apt to provide good mechanical properties as well as water and fuel resistance of the resulting sealants.

This objective has been solved by the subject-matter of the claims of the present application as well as by the preferred embodiments thereof disclosed in this specification, i.e., by the subject matter described herein below.

A first subject-matter of the present invention is a composition comprising thiol group containing poly(ether-thioether) species having the general structures

[H(S-R¹)ₚ-S-(CH₂)ᵣ-O]ₘ-R²-O-[R³-(S)ₛ-R⁴-O]-[R⁵-O]ₙ-R⁶ (Ia)

and/or 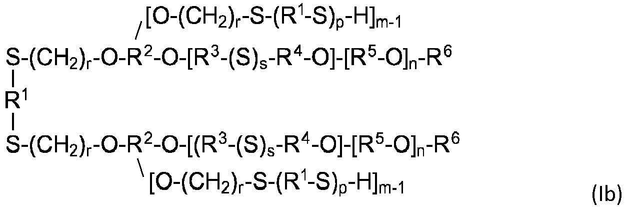 wherein,
if residues R¹, R², R³, R⁴, R⁵, R⁶ and R^{a} and the integers denoted n, m, p, r, s, t, y and z occur more than one time in a species of formula (Ia) and/or (Ib), those residues and integers are selected independently of each other with the following provisos:
R¹ is an aliphatic or aromatic divalent organic residue, which can comprise besides hydrogen atoms and carbon atoms one or more heteroatoms selected from O, S, N and halide, and wherein residue R¹ is attached to the adjacent S atoms by carbon atoms;
R² is an aliphatic or aromatic (m+1)-valent organic residue, with m = 2 or 3, which can comprise besides hydrogen atoms and carbon atoms one or more heteroatoms selected from O, S, N and halides, and wherein residue R² is attached to the adjacent O atoms by carbon atoms;
R³ and R⁴ are divalent residues (CHR^{a})ₜ with t = 2 to 4, wherein residues R^{a} are selected from H and hydrocarbyl groups comprising 1 to 12, preferably 1 to 8, more preferred 1 to 6 and most preferred 1 to 4 carbon atoms;
y of the n residues R⁵
are branched divalent hydrocarbon residue comprising 4 to 20, preferably 4 to 15, and more preferably 4 to 10 carbon atoms, with y being ≥ 1;
z of the n residues R⁵ are residues R³-(S)ₛ-R⁴, z being ≥ 1; and n independently of each other is y + z and n independently of each other is a number in the range from 2 to 200, preferably 2 to 150 more preferably 2 to 100;
R⁶ is H in case R⁵ is a branched divalent hydrocarbon residue comprising 4 to 20, preferably 4 to 15, and more preferably 4 to 10 carbon atoms, or
R⁶ is H or R²-[O-(CH₂)ᵣ-S-R¹-SH]ₘ in case R⁵ being a residue R³-(S)ₛ-R⁴; and
p = 0 or 1, preferably p = 1;
r = 2 or 3, preferably r = 3; and
s = 1 to 8, preferably s = 1, or 2 to 8, such as 3 to 6.

The composition comprising the thiol group containing poly(ether-thioether) species having the general structure (Ia) and/or (Ib) and any preferred embodiment thereof are herein denoted as the composition comprising the thiol group containing poly(ether-thioether) species according to the invention, or just composition of the invention.

The term "composition," as understood by one of skill in the art, reflects that due to the method of producing the species of formulae (Ia) and (Ib), as comprised therein, the species have a polymeric character, i.e., are not chemical substances which can be described by one single formula, wherein all residues and integers are the same. Thus, the composition above and its preferred embodiments described herein below, comprise or consist of a mixture of species (Ia) and/or (Ib).

The term "poly(ether-thioether)" species denotes a polymer comprising ether groups and thioether groups.

The term "thiol group containing" means in the context of species of formulae (Ia) that one or more thiol groups are located at least at one end of the polymeric chain, preferably at both ends of the polymeric chain. In case of formula (Ia) the term "thiol group containing" is equivalent to the term "thiol group terminated." In case of the species (lb), which can be considered as "dimers" of species (Ia), the thiol groups are still contained, but not necessarily terminal, but preferably at least one of residues R⁶ carries at least one terminal thiol group.

The term "residue R^{x} is attached to the adjacent Y atoms by carbon atoms," wherein R^{x} denotes for a specific residue R¹, R², etc. and Y for a specific element or group, means that Y is bound to carbon atoms contained in residue R^{x}. This excludes that Y is, e.g., bound to heteroatoms, which may be comprised in residue R^{x}.

A second subject-matter of the present invention is a method for producing a composition comprising thiol group containing poly(ether-thioether) species as defined in formulae (Ia) and/or (Ib), the method comprising two steps (i) and (ii), wherein in
step (i) at least one compound of formula HO-R³-(S)ₛ-R⁴-OH, at least one compound of formula HO-R⁵-OH, wherein R⁵ is a branched divalent hydrocarbon residue comprising 4 to 20, preferably 4 to 15, and more preferably 4 to 10 carbon atoms, and at least one compound of formula HO-R²-[O(CH₂)ⱼCH=CH₂]ₘ are reacted, wherein R², R³, R⁴ and R⁵ and the values of s and m are defined as in formulae (Ia) and (Ib), and j = 0 or 1, the m values for integer j being same or different, preferably being same; followed by
step (ii) wherein the vinyl group terminated poly(ether-thioether) species and/or the allyl group terminated poly(ether-thioether) species are reacted with an inorganic hydrogen sulfide and/or an organic dithiol of formula HS-R¹-SH, wherein R¹ is defined as for the thiol group containing poly(ether-thioether) according to the invention, thus obtaining the composition comprising thiol group containing poly(ether-thioether) species according to the invention.

The method of producing a composition comprising thiol group containing poly(ether-thioether) species having the general structures (Ia) and/or (Ib) and any preferred embodiment thereof are herein denoted as the method of producing a composition comprising the thiol group containing poly(ether-thioether) species according to the invention.

The term "the m values for integer j being same or different" means that j is present m-times in HO-R²-[O(CH₂)ⱼCH=CH₂]ₘ and each of the m values j can either be 0 or 1.

A third subject-matter of the present invention is a poly(ether-thioether) species having the general structure (II)

[CH₂=CH-(CH₂)ⱼ-O]ₘ-R²-O-[R³-(S)ₛ-R⁴-O]-[R⁵-O]ₙ-R⁶ (II)

wherein
R², R³, R⁴, R⁵, n, m and s are defined as for thiol group containing poly(ether-thioether) species as defined herein above and below,
R⁶ being H in case R⁵ is a branched divalent hydrocarbon residue comprising 4 to 20, preferably 4 to 15, and more preferably 4 to 10 carbon atoms, or
R⁶ being H or R²-[O-(CH₂)ⱼ-CH=CH₂]ₘ in case R⁵ being a residue R³-(S)ₛ-R⁴; and j = 0 or 1, and the m values for integer j being same of different, preferably being same.

The vinyl and/or allyl group terminated poly(ether-thioether) species having the general structure (II) and any preferred embodiment thereof are herein denoted as the vinyl group terminated poly(ether-thioether) species and/or the allyl group terminated poly(ether-thioether) species according to the invention. This is a novel intermediate product which is used in the manufacture of the composition of the thiol group containing poly(ether-thioether) species according to the invention.

A fourth subject-matter of the invention is a method of producing the vinyl group terminated poly(ether-thioether) species and/or allyl group terminated poly(ether-thioether) species according to the invention, the method comprising or consisting of step (i) of the method of producing a thiol group containing poly(ether-thioether) according to the invention.

This method and any preferred embodiment thereof is herein denoted as method of producing an vinyl and/or allyl group terminated poly(ether-thioether) according to the invention.

A fifth subject-matter of the invention is a two-component (2K) sealing system comprising components (A) and (B) being separate from each other, wherein component (A) of the sealing system comprises at least one composition comprising one or more of the thiol group containing poly(ether-thioether) species of formulae (Ia) and/ or (Ib) according to the invention or obtainable by the method according to the invention, and wherein component (B) of the sealing system comprises at least one constituent b, which is suitable for hardening the sealant composition by at least partially inducing a chemical transformation of at least part of the thiol groups of the thiol group containing poly(ether-thioether) species of formulae (Ia) and/or (Ib).

This two-component sealing system and any preferred embodiment thereof is herein denoted as two-component sealing system according to the invention.

A sixth subject-matter of the invention is a sealant composition, which is obtainable by mixing components (A) and (B) of a sealing system according to the invention with each other.

This sealant composition and any preferred embodiment thereof is herein denoted as sealant composition according to the invention.

A seventh subject-matter of the invention is a method of sealing an optionally pre-coated substrate comprising at least a step of applying a sealant composition of the invention at least in portion onto a surface of an optionally pre-coated substrate, wherein the optionally pre-coated substrate preferably is a substrate utilizable in the aerospace and/or aircraft industry.

This method and any preferred embodiment thereof are herein denoted as method of sealing a substrate according to the invention.

An eighth subject-matter of the invention is a sealed substrate, obtainable by the method of sealing a substrate according to the invention.

This substrate and any preferred embodiment thereof are herein denoted as sealed substrate according to the invention.

A ninth subject matter of the invention is the use of the sealing system according to the invention or of the sealant composition according to the invention for providing a sealing at least in portion onto a surface of an optionally pre-coated substrate, which is utilizable in the aerospace and/or aircraft industry.

This use and any preferred embodiment thereof are herein denoted as use according to the invention.

### DETAILED DESCRIPTION OF THE INVENTION

In the following the composition comprising the thiol group containing poly(ether-thioether) species as used in the two-pack sealing system and the sealant composition obtained therefrom will be described in more detail. Furthermore, novel vinyl and/or allyl group terminated poly(ether-thioether) species, which are an intermediate in the production of the thiol group containing poly(ether-thioether) species of the invention and a method of producing the same will be described. Finally, the two-pack sealing compositions, the thereof produced sealant compositions, the method of sealing and the sealed substrates are described in more detail as well as the use of the sealing system or sealant.

If the term "comprising" is used in this specification, it is used in its common, i.e., non-excluding meaning. As an example, if an embodiment comprises A and B, that means that A and B are mandatory, but the embodiment does not exclude further components such as C, D etc. besides A and B. On the other hand, the meaning "consisting of" is included in the meaning of comprising, e.g., if the embodiment *only* comprises A and B, and *not* C, D etc. Thus, any embodiments described and/or claimed herein using the term "comprising" can besides the broader meaning of "comprising," be limited to the term "consisting of" as a specific embodiment.

### Composition Comprising Thiol group containing Poly(ether-thioether) Species (la) and/or (Ib)

The invention provides a composition comprising thiol group containing poly(ether-thioether) species having the general structures

[H(S-R¹)ₚ-S-(CH₂)ᵣ-O]ₘ-R²-O-[R³-(S)ₛ-R⁴-O]-[R⁵-O]ₙ-R⁶ _{(Ia)}

and/or 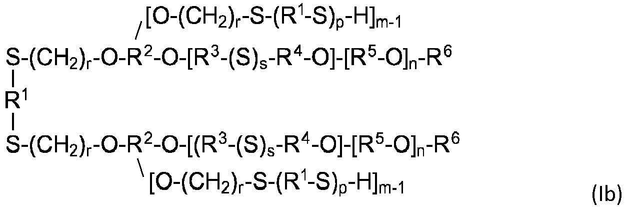 wherein,
if residues R¹, R², R³, R⁴, R⁵, R⁶ and R^{a} and the integers denoted n, m, p, r, s, t, y and z occur more than one time in a species of formula (Ia) and/or (Ib), those residues and integers are selected independently of each other with the following provisos:
R¹ is an aliphatic or aromatic divalent organic residue, which can comprise besides hydrogen atoms and carbon atoms one or more heteroatoms selected from O, S, N and halide, and wherein residue R¹ is attached to the adjacent S atoms by carbon atoms;
R² is an aliphatic or aromatic (m+1)-valent organic residue, with m = 2 or 3, which can comprise besides hydrogen atoms and carbon atoms one or more heteroatoms selected from O, S, N and halides, and wherein residue R² is attached to the adjacent O atoms by carbon atoms;
R³ and R⁴ are divalent residues (CHR^{a})ₜ with t = 2 to 4, wherein residues R^{a} are selected from H and hydrocarbyl groups comprising 1 to 12, preferably 1 to 8, more preferred 1 to 6 and most preferred 1 to 4 carbon atoms;
y of the n residues R⁵ are branched divalent hydrocarbon residue comprising 4 to 20, preferably 4 to 15, and more preferably 4 to 10 carbon atoms, with y being ≥ 1;
z of the n residues R⁵ are residues R³-(S)ₛ-R⁴, z being ≥ 1; and n independently of each other is y + z and n independently of each other is a number in the range from 2 to 200, preferably 2 to 150, more preferably 2 to 100;
R⁶ is H in case R⁵ is a branched divalent hydrocarbon residue comprising 4 to 20, preferably 4 to 15, and more preferably 4 to 10 carbon atoms, or R⁶ is H or R²-[O-(CH₂)ᵣ-S-R¹-SH]ₘ in case R⁵ being a residue R³-(S)ₛ-R⁴; and
p = 0 or 1, preferably p = 1;
r = 2 or 3, preferably r = 3; and
s = 1 to 8, preferably s = 1, or 2 to 8, such as 3 to 6.

### Residue R¹

Residue R¹ is the residue of a dithiol having the structure HS-R¹-SH, deprived of its thiol groups.

R¹ may be any aliphatic or aromatic divalent organic group, preferably a linear, branched, or cyclic aliphatic or aromatic divalent hydrocarbon group, which is attached to the adjacent S atoms in formulae (Ia) and (Ib) by carbon atoms. Besides hydrogen atoms and carbon atoms R¹ may comprise heteroatoms selected from O, S, N and halides, more preferred O and S. If O and S are contained, it is preferred that O and S are present in form of ether and thioether groups, respectively. Less preferred O and S can be present as OH and SH groups respectively. Preferably, R¹ does not contain OH and SH groups.

More preferred residues R¹ are linear, branched, or cyclic aliphatic or aromatic divalent hydrocarbon groups, consisting of carbon atoms and hydrogen atoms, wherein residues R¹ are attached to the adjacent S atoms in formula (I) by carbon atoms.

Most preferred residues R¹ are linear or branched or cyclic alkylene groups preferably comprising 2 to 21, more preferred 2 to 16, and even more preferred 2 to 10 carbon atoms. Particularly preferred R¹ is ethylene, n-propylene, i-propylene, n-butylene, i-butylene, t-butylene, whereunder ethylene is most preferred. However, if odor reduction is an issue, residue R¹ in HS-R¹-SH is preferably in the upper range of the carbon atom number range.

If more than one residue R¹ is present in formulae (la) and/or (Ib), all residues R¹ may be same or different and are independently of each other defined as above.

However, R¹ is only present in the thiol group containing poly(ether-thioether) species of formulae (Ia), if at least one value for p is 1. In species (Ib) R¹ is always present. In all of the m residues [H(S-R¹)ₚ-S-(CH₂)ᵣ-O] the values of p may be the same or different. If all values of p are 0, formula (Ia) lacks residue R¹.

### Residue R²

R² is a (m+1)-valent residue, and may be any aliphatic or aromatic (m+1)-valent organic group, preferably a linear, branched, or cyclic aliphatic or aromatic (m+1)-valent hydrocarbon group, which besides hydrogen atoms and carbon atoms may comprise heteroatoms selected from O, S, N and halides, and wherein residue R² is attached to the adjacent O atoms in formulae (Ia) and (Ib) by carbon atoms. R² preferably comprises 2 to 12 carbon atoms, more preferred 2 to 6 carbon atoms.

Amongst the afore-mentioned definition of residues R², it is even more preferred that R² is a branched aliphatic (m+1)-valent hydrocarbon group, which besides hydrogen atoms and carbon atoms may comprise heteroatoms selected from O, S, N and halides, and wherein residue R² is attached to the adjacent O atoms in formulae (Ia) and (Ib) by carbon atoms.

Even more preferred residues R² are branched aliphatic (m+1)-valent hydrocarbon groups, consisting of carbon atoms and hydrogen atoms, wherein residues R² are attached to the adjacent O atoms in formulae (Ia) and (Ib) by carbon atoms.

Particularly preferred examples of (m+1) valent residues R² are, for m = 2, the residues of glycerol and/or trimethyolpropane, deprived of their OH groups, i.e., R² = CH₂CHCH₂ and CH₂C(CH₂)(CH₂CH₃)CH₂, or for m = 3, residue R² can be the residue of pentaerythritol deprived of its OH groups, i.e., R² = C[(CH₂)]₄.

### Residues R³ and R⁴

R³ and R⁴ are divalent residues (CHR^{a})ₜ with t = 2 to 4, wherein residues R^{a} are selected from H and hydrocarbyl groups comprising 1 to 12, preferably 1 to 8, more preferred 1 to 6 and even more preferred 1 to 4 carbon atoms, further preferred 1 to 3, even further preferred 1 or 2 carbon atoms, and most preferred 1 carbon atom. Most preferred at least one of R^{a} is H and even more preferred all R^{a} are H. Particularly preferred, t = 2, and residues R³-(S)ₛ-R⁴ with s = 1 are residues of bis(beta-hydroxy) thioethers deprived of their hydroxy groups.

R³ and R⁴ are parts of residue R³-(S)ₛ-R⁴ originating from diols of formula HO-R³-(S)ₛ-R⁴-OH, wherein s = 1 to 8. For s = 2 a dithio group S-S is present. In the manufacture of such polythio groups, species result having, e.g., up to 8 sulfur atoms in a row. Typically, in such case a distribution of S-chain length from s = 2 to 8 sulfur atoms results. In the later application of species of formulae (Ia) and (Ib) in sealant compositions, such residues R³-(S)ₛ-R⁴ with s = 2 to 8 may undergo cleavage reactions.

### Residues R⁵

The n residues R⁵ may be branched divalent hydrocarbon residue comprising 4 to 20, preferably 4 to 15, and more preferably 4 to 10 carbon atoms, or residues R³-(S)ₛ-R⁴ with R³ and R⁴ being defined as above. Preferably, R⁵ is a saturated branched divalent hydrocarbon residue, with the afore-mentioned number of carbon atoms.

Particularly, y of the n residues R⁵ are branched divalent hydrocarbon residue comprising 4 to 20, preferably 4 to 15, and more preferably 4 to 10 carbon atoms and z of the n residues R⁵ are residues R³-(S)ₛ-R⁴, with R³ and R⁴ being defined as above, with the proviso that y + z = n, with n being a number in the range from 2 to 200, preferably 2 to 150, more preferably 2 to 100; and y ≥ 1 and z ≥ 1.

Preferably z ≥ y, and even more preferable the ratio z/y is in the range from 15 to 1, even more preferable in the range from 10 to 2, even further preferred in the range from 8 to 3, and more preferred 6 to 4.

In the preferred case that z ≥ y, it is further preferred that each of residues [R⁵-O], wherein R⁵ is a branched divalent hydrocarbon residue comprising 4 to 20, preferably 4 to 15, and more preferably 4 to 10 carbon atoms, is bound
i. at both sides of this residue directly to a residue [R³-(S)ₛ-R⁴-O]; or
ii. at the O atom of the residue [R⁵-O] directly to H.

Most preferred
(a) the thiol group containing poly(ether-thioether) species of formulae (Ia) and/or (Ib) do not contain moieties [R⁵-O]-[R⁵-O], wherein in both adjacent units [R⁵-O] the residues R⁵ are branched divalent hydrocarbon residues comprising 4 to 20, preferably 4 to 15, and more preferably 4 to 10 carbon atoms; and/or
(b) the thiol group containing poly(ether-thioether) species of formulae (Ia) and/or (Ib) do contain moieties [R⁵-O]-[R⁵-O], wherein in both adjacent units [R⁵-O] the residues R⁵ are a residue R³-(S)ₛ-R⁴.

### Residue R⁶

Residues R⁶ terminate the thiol group containing poly(ether-thioether) species of formula (Ia) and/or (Ib). R⁶ may be H, thus introducing an OH group at one terminus. This is typically the case if in the adjacent unit [R⁵-O] residue R⁵ is a branched divalent hydrocarbon residue comprising 4 to 20, preferably 4 to 15, and more preferably 4 to 10 carbon atoms. However, it is not excluded that R⁶ is H, if in the adjacent unit [R⁵-O] residue R⁵ is a residue R³-(S)ₛ-R⁴.

Nevertheless, it is preferred, that R⁶ is R²-[O-(CH₂)ᵣ-S-R¹-SH]ₘ, if in the adjacent unit [R⁵-O] residue R⁵ is a residue R³-(S)ₛ-R⁴.

### Values for n, m, p, r, s, and t

The value for n is preferably in the range from 2 to 200, more preferably 2 to 150, even more preferably 2 to 100; and at a given number average molecular weight of the thiol group containing poly(ether-thioether) species of formulae (Ia) and (Ib) limited by this number average molecular weight Mₙ. From the number average molecular weight Mₙ of the sum of thiol group containing poly(ether-thioether) species of the invention and the type and ratio of monomers used in their manufacture the value of n can easily be calculated by one of skill in the art. For the vinyl and/or allyl group terminated poly(ether-thioether) species according to the invention, which can be used as intermediate product in the manufacture of the thiol group containing poly(ether-thioether) of the invention, the same calculation can be carried out to obtain the value of n.

The value of m is determined by the type of compound used to introduce the precursors of the thiol group containing poly(ether-thioether) species of the invention. The compounds used to introduce the precursors are preferably the vinyl and/or allyl group containing compounds of formula HO-R²-[O(CH₂)ⱼCH=CH₂]ₘ, as described below.

The values of p depend on the compound used to introduce the terminal thiol groups. The value of p = 0, if the terminal thiol group is introduced by an inorganic hydrogen sulfide, while p = 1, if the terminal thiol group is introduced by a dithiol of formula HS-R¹-SH.

The value of r = 2 or 3. In view of stability of the species, it is preferred that r = 3.

The value of s is 1 to 8, preferably the value of s = 1 or 2 to 8, such as 2 to 6.

The value of t is 2 to 4. Most preferably t = 2 or 3, even more preferred 2.

Particularly preferred m = 2 or 3, most preferred 2, p = 1, r = 3, s = 1, t = 2, and u = 0.

As is derivable from the motive [R³-(S)ₛ-R⁴-O]-[R⁵-O]ₙ in the thiol group containing poly(etherthioether) species, the backbone of the thiol group containing poly(ether-thioether) species of formulae (Ia) and (Ib) is linear, since no branching points originating from triols or higher polyol are present. However, since R³, R⁴ may have side groups R^{a}, which may differ from H and being hydrocarbyl groups comprising 1 to 12 carbon atoms, y of the n residues R⁵ are branched divalent hydrocarbon residues comprising 4 to 20, preferably 4 to 15, and more preferably 4 to 10 carbon atoms, thus mandatorily having side groups. Such side groups, typically lower the melting point of such polymers. Thus, the thiol group containing poly(ether-thioether) species of formulae (Ia) and (Ib) according to the invention are preferably liquid at a temperature of 23 °C and a pressure of 101.325 kPa (= 1 atm).

Preferably, the number average molecular weight (Mₙ) of the sum of thiol group containing poly(ether-thioether) species of formula (Ia) and (Ib) is in a range of from 500 to 15000 g/mol, more preferably of from 600 to 10000 g/mol, even more preferably of from 700 to 7500 g/mol, yet more preferably of from 800 to 5000 g/mol, still more preferably of from 900 to 4500 g/mol, most preferably of from 1000 to 4000 g/mol. Mₙ is determined according to the gel permeation chromatography (GPC) method disclosed in the 'methods' section. With the term "the sum of" herein it is meant the mixture consisting of all species of formula (Ia) and (Ib), preferably as obtained by the method as described herein below and without any further purification, such as catalyst separation. The number-average molecular weight is linked with the molecular weight of the starting compounds and particularly with the value of n, since n is most responsible for the length of the linear part of the thiol group containing poly(ether-thioether) species of formulae (Ia) and (Ib). However, the number average molecular weight ranges preferably determine and thus limit the possible upper and lower limits of any n values selected.

Preferably, the sum of thiol group containing poly(ether-thioether) species of formula (Ia) and (Ib) has an SH-content in a range of from 1 wt.-% to 10 wt.-%, more preferably of from 1.1 to 9.5 wt.-%, even more preferably of from 1.2 to 9 wt.-%, still more preferably of from 1.3 to 8.5 wt.-%, yet more preferably of from 1.4 to 8 wt.-%, still more preferably of from 1.5 to 7.5 wt.-%, even more preferably of from 1.5 to 7 wt.-%, yet more preferably of from 1.5 to 6.5 wt.-%, still more preferably of from 1.5 to 6 wt.-%, in each case based on the total weight of the thiol group containing poly(ether-thioether) species. The SH-content is determined according to the method disclosed in the 'methods' section.

The composition comprising the thiol group containing poly(ether-thioether) species (Ia) and/or (Ib) may contain further ingredients, such as solvents or additives such as catalysts used in the production of the species.

The composition comprising the thiol group containing poly(ether-thioether) species (Ia) and/or (Ib) is preferably the non-volatile reaction product of the reaction mixture obtained by the method of producing a composition containing the thiol group containing poly(ether-thioether) species of formulae (ia) and (Ib). If desired, water-soluble additives can be removed, e.g., by agitating, such as shaking, a solution of the thiol group containing poly(ether-thioether) species dissolved in water-insoluble solvent(s) with water (preferably containing an alkaline pH adjusting agent), thus extracting the water-soluble additives such as acidic catalysts into the aqueous phase. The aqueous phase thus formed can be removed and the solvent phase may be dried to obtain a purified mixture of thiol group containing poly(ether-thioether) species of formulae (Ia) and/or (Ib). Removal of the water-insoluble organic solvent(s) results in a purified solventless or solvent free mixture of thiol group containing poly(ether-thioether) species which consists of or essentially consists of thiol group containing poly(ether-thioether) species of formulae (Ia) and/or (Ib).

The composition comprising the thiol group containing poly(ether-thioether) species (Ia) and/or (Ib), preferably contains, after removal of water and organic solvents, at least 60 wt.-%, even more preferred at least 70 wt.-%, such as 60 to 100 wt.-%, more preferred 70 to 98 wt.-%, even more preferred 80 to 98 wt.-% or 85 to 98 wt.-% of the sum of thiol group containing poly(ether-thioether) species of formulae (Ia) and (Ib) based on the weight of the compositions after removal of water and organic solvents.

### Method of Producing Compositions Comprising Thiol group containing Poly(etherthioether) Species (la) and/or (Ib) Via Vinyl and/or Allyl Group Containing Compounds of General Structure (II)

The present invention also provides a two-step method of producing a composition comprising thiol group containing poly(ether-thioether) species according to the invention.

In the *first step (i)* of this method a vinyl and/or allyl group terminated poly(ether-thioether) according to the invention is formed by a condensation reaction. In the *second step (ii)* an SH functional compound is reacted in an addition reaction with the vinyl and/or allyl group of the vinyl and/or allyl group terminated poly(ether-thioether) species formed in the first step (i).

### Step (i)

At least one compound of formula HO-R³-(S)ₛ-R⁴-OH, at least one compound of formula HO-R⁵-OH, wherein R⁵ is a branched divalent hydrocarbon residue comprising 4 to 20, preferably 4 to 15 more preferably 4 to 10 carbon atoms, and at least one compound of formula HO-R²-[O(CH₂)ⱼCH=CH₂]ₘ are reacted to obtain an vinyl and/or allyl group terminated poly(ether-thioether).

Residues R², R³, R⁴ and R⁵ and the values of m, s and j are defined as above for the thiol group containing poly(ether-thioether) species of formulae (Ia) and (Ib) according to the invention and the preferred embodiments thereof.

All three types of compounds are preferably mixed and reacted in mixture. The compounds of formula HO-R³-(S)ₛ-R⁴-OH are most reactive under condensation reaction conditions, because of the high reactivity of the two hydroxy groups which are preferably in beta-position to the thioether sulfur atom. Therefore, compounds HO-R³-(S)ₛ-R⁴-OH are preferably used in excess. This is particularly preferred to guarantee adequate chain length of the thiol group containing poly(ether-thioether). Most preferably the excess is such that in the formation of the linear polymeric backbone the two OH groups of the compounds of formula HO-R⁵-OH, wherein R⁵ is a branched divalent hydrocarbon residue comprising 4 to 20, preferably 4 to 15, and more preferably 4 to 10 carbon atoms, are each reacted with a compound of formula HO-R³-(S)ₛ-R⁴-OH. A thus formed linear motive has a structure [R³-(S)ₛ-R⁴-O]-[R⁵-O]ₙ₋₁-[R³-(S)ₛ-R⁴-O], wherein, if R⁵ in unit [R⁵-O] is a branched divalent hydrocarbon residue comprising 4 to 20, preferably 4 to 15, and more preferably 4 to 10 carbon atoms, at both sides of said unit [R⁵-O], units [R³-(S)ₛ-R⁴-O] are attached. Of course, two or more units [R³-(S)ₛ-R⁴-O] can also be in a row.

The reaction is preferably carried out under acidic catalysis at elevated temperature, in the presence of one or more organic solvents, which are inert under reaction conditions.

The acidic catalysts are selected from the group of inorganic or organic acids. In general, Lewis and Bronsted acids are suitable. Preferred inorganic acids are phosphorous acid, phosphoric acid and phosphotungstic acid hydrate. Preferred organic acids are sulfonic acids, particularly preferred are, e.g., para-toluene sulfonic acids and methyl sulfonic acid. The acidic catalysts can also be employed in form of acidic solid particles, such as e.g. acidic ion exchangers. This bears the advantage that removal of such acidic catalyst can be carried out after completion of the reaction by simple filtration or centrifugation.

Reaction conditions are the typical condensation reaction conditions, which are known by one of skill in the art. Preferably, the reaction carried out in an organic solvent, which is under reaction conditions inert towards the reactants. Even more preferred the reaction is carried out in an organic solvent which does not comprise groups which may react with thiol groups, hydroxyl groups, vinyl groups or allyl groups. The organic solvents can be aliphatic and/or aromatic organic solvents, and are most preferably aromatic solvents, such as xylene and toluene. Particularly preferred are organic solvents which are not apt to dissolve water. Reaction water formed can be collected by common means which are typically used therefore, distilling traps, such as a Deans-Stark apparatus. The reaction is preferably performed under solvent re-flux conditions. Thus, the reaction temperature depends on the solvent used and the reaction duration depends on the reactants, particularly the hydroxy functional starting compounds and the catalyst used.

In such first step (i) allyl group terminated poly(ether-thioether) are formed, which preferably have the general structure (II) as defined herein below.

### Step (ii)

In the *second step (ii)* the allyl groups of the allyl group terminated poly(ether-thioether) formed in the *first step (i)* are reacted with an inorganic hydrogen sulfide, preferably an alkali hydrogen sulfide or with an organic dithiol of formula HS-R¹-SH, wherein R¹ is defined as above for the thiol group containing poly(ether-thioether) according to the invention and the preferred embodiments thereof. The afore-mentioned reactions are addition reactions.

In case an inorganic hydrogen sulfide is used, it is particularly preferred an alkali hydrogen sulfide, even more preferred sodium hydrogen sulfide.

Even more preferred is the use of an organic dithiol HS-R¹-SH, wherein R¹ is defined as above for the thiol group containing poly(ether-thioether) according to the invention and for the preferred embodiments thereof. The reaction of an organic dithiol with an ethylenically unsaturated group, such as an allyl group is also known as thiol-ene reaction. Such reactions can, e.g., be carried out by radical forming mechanisms (radical addition) or catalytic by catalytic addition. A scientific review article about "Thiol-En-Klickchemie" by Charles E. Hoyle and Christoper N. Bowman was published in Angew. Chem. 2010, 122, 1584-1617. However, the present invention is not limited to the thiol-ene reaction mechanisms described in the aforementioned article.

Preferably the thiol-ene reaction is carried out by radical forming mechanisms. Preferred radical initiators are azo compounds such as azobisisobutyronitrile (AIBN; 2,2'-azobis(2-methylpropionitrile)),1,1'-azobis(cyclohexanecarbonitrile) (Vazo 88) and 2,2'-azobis(2-methylbutyronitrile) (Vazo 67).

The reaction is preferably carried out under re-flux in hydrocarbon solvents, more preferably aliphatic or aromatic hydrocarbons, most preferred aromatic solvents such as xylenes and toluenes. The duration of the reaction is preferably in the range or 1 to 10 hours, more preferred 2 to 8 hours, most preferred 4 to 7 hours, but at least until no water is collected.

### Vinyl and/or Allyl Group Terminated Poly(ether-thioether) And Method of Producing the Same

The present invention also relates to poly(ether-thioether) species having the general structure (II)

[CH₂=CH-(CH₂)ⱼ-O]ₘ-R²-O-[R³-(S)ₛ-R⁴-O]-[R⁵-O]ₙ-R⁶ (II)

wherein
R², R³, R⁴, R⁵, n, m and s are defined as for thiol group containing poly(ether-thioether) species (Ia) and (Ib) as described herein above as part of the inventive compositions,
R⁶ being H in case R⁵ is a branched divalent hydrocarbon residue comprising 4 to 20, preferably 4 to 15, and more preferably 4 to 10 carbon atoms, or
R⁶ being H or R²-[O-(CH₂)ⱼ-CH=CH₂]ₘ in case R⁵ being a residue R³-(S)ₛ-R⁴; and j = 0 or 1, and the m values for integer j being same of different, preferably being same.

Alle preferred definitions and ranges with respect to R², R³, R⁴, R⁵, n, m, r and s as described for the poly(ether-thioether) according to the invention apply also for the allyl group terminated poly(ether-thioether) according to the invention.

The allyl group terminated poly(ether-thioether) according to the invention can be produced as described for the *first step (i)* of the method of producing a thiol group containing poly(etherthioether) according to the invention.

All preferred reaction conditions as described above for the *first step (i)* of the method of producing a thiol group containing poly(ether-thioether) according to the invention likewise apply to the method of producing an allyl group terminated poly(ether-thioether) according to the invention.

The allyl group terminated poly(ether-thioether) according to the invention is a useful intermediate in the production of the thiol group containing poly(ether-thioether) according to the invention.

### Sealing system

A further subject-matter of the present invention is a two-component (i.e., two-pack) sealing system comprising components (A) and (B) being stored separate from each other, wherein component (A) of the sealing system comprises at least one composition comprising the thiol group containing poly(ether-thioether) species of formulae (Ia) and/or (lb) as described herein above or at least one of such compositions obtainable by the inventive method, and wherein component (B) of the sealing system comprises at least one constituent b, which is suitable for hardening the sealant composition by at least partially inducing a chemical transformation of the thiol groups of the thiol group containing poly(ether-thioether) species. Components (A) and (B) of the sealing system are stored separately until they are mixed with each other in order to prepare the sealant composition.

All preferred embodiments described herein above in connection with the method of producing a composition comprising the thiol group containing poly(ether-thioether) species of formulae (Ia) and/or (lb) and the composition comprising said thiol group containing poly(ether-thioether) species and the preferred embodiments thereof, are also preferred embodiments of the inventive sealant system.

Preferably, the sealing system consists of components (A) and (B).

### Component (A)

Component (A) at least comprises a composition comprising the thiol group containing poly(ether-thioether) species of formulae (Ia) and/or (Ib) or the composition obtained by the method of the present invention as described in this specification. Component (A), as such, is not suitable as a sealant itself. Only after mixing component (A) with component (B), which comprises at least one constituent b, which is suitable for hardening the sealant composition by at least partially inducing a chemical transformation of the thiol groups of the thiol group containing poly(ether-thioether) species as defined according to the invention, a sealant composition according to the present invention is formed. Thus, the sealing system is a typical kit-of-parts system describing the juxtaposition of separate but functionally interacting individual components.

In the following the mandatory ingredients of component (B) will be described, and subsequently further constituents which might be contained in component (A) and/or (B).

### Component (B)

Component (B) of the sealing system comprises at least one constituent b, which is suitable for hardening the sealant composition by at least partially inducing a chemical transformation of the at least two thiol groups of the thiol group containing poly(ether-thioether) species as defined according to the invention. In other words, constituent b or part of it can be chemically reacted with the thiol groups of said polymer. Constituent b thus represents a curing agent. The resulting chemical transformation may apply to all thiol groups of the polymer or to only part of the thiol groups of the polymer. Preferably, however, a chemical transformation is not only induced partially, but substantially to all thiol groups of the thiol group containing poly(ether-thioether) species as defined according to the invention.

Preferably, constituents b can be classified as follows:
- constituents b1 comprising two or more epoxide groups
- constituents b2, being metal oxides and/or metal peroxides, in particular manganese dioxide,
- constituents b3, which are organic peroxides, and
- constituents b4 comprising two or more vinyl groups.
- constituents b5 comprising two or more isocyanate groups

It is also possible that mixtures of two or more different constituents b1, or b2, or b3, of b4 are used; or even mixtures of two or more constituents from the group of constituents consisting of b1, b2, b3, b4 and b5.

More preferably constituent b is selected from the group consisting of constituents comprising two or more epoxide groups (constituents b1), constituents, which are metal oxides and/or metal peroxides, in particular manganese dioxide, (constituents b2), and mixtures thereof. Even more preferable constituent b is either selected from constituents b1 or b2, and most preferred constituent b is selected from constituents b1.

Preferably, constituent b is present in component (B) of the sealing system in an amount in a range of from 30 to 100 wt.-%, based on the total weight of component (B).

### Constituents b 1

Constituent b1 comprises two or more epoxide groups. Preferably, the epoxide groups are present in b1 as terminal groups. Constituent b1 can be monomeric, oligomeric or polymeric. Preferably, b1 is aliphatic and/or aromatic.

Preferably, constituent b1 is present in component (B) of the sealing system in an amount in a range of from 50 to 100 wt.-%, based on the total weight of component (B).

Preferably, b1 has an epoxide functionality of from 2.0 to 5.0, more preferably of from 2.0 to 3.0, in particular of from 2.0 to 2.8.

Constituent b1 is particularly selected from diglycidyl ethers of bisphenol A, diglycidyl ethers of bisphenol F and aliphatic polyglycol and/or hydantoin epoxy derivatives. Also, epoxy-terminated polythioether or polythioethersulfide and/or epoxidized polysulfides may be used. Particularly preferred is also at least one epoxy-novolac resin (epoxidized phenol formaldehyde resin), preferably a cross-linked epoxy novolac resin. It is also possible that more than one of constituents b1 can be used based on several of the abovementioned classes, for example, bisphenol A/F epoxy resin or bisphenol F novolac resin. Component (B) may additionally contain reactive diluting agents in order to adjust the viscosity and flexibility, for example. Examples of reactive diluting agents are 1,4-butanediol diglycidyl ether, 2-ethylhexylglycidyl ether, 1,1,1-trimethylolpropantriglycidylether and 1,6-hexanediol diglycidyl ether.

Preferably, b1 is at least one epoxide-terminated polysulfide polymer and/or polythioether polymer and/or polythioethersulfide polymer without terminal mercapto groups, which serves as a curing agent due to its two or more terminal epoxide groups. This polymer is preferably present as a liquid or highly viscous polymer with an epoxy equivalent weight in particular in the range from 200 to 800 g/eq.

Preferably, the epoxy (epoxide) equivalent weight of b1 is in the range of from 120 to 800 g/eq, particularly preferably in the range of from 140 to 700 g/eq, and most preferably in the range of from 170 to 400 g/eq.

Most particularly preferred are constituents b1 based on bisphenol A epoxy resins having an epoxy equivalent weight in the range from 170 to 200 g/eq, based on bisphenol F resin having an epoxy equivalent weight in the range from 150 to 180 g/eq and based on epoxy novolac resins having an epoxy equivalent weight in the range from 160 to 220 g/eq.

Examples of suitable commercial products are e.g. bisphenol F epoxy resins such as DEN 354 (Olin Epoxy), bisphenol A resins such as DER 336, DER 331 (Olin Epoxy), bisphenol A/F epoxy resins such as DER 351, DER 324, DER 335 (Olin Epoxy), epoxy novolac resins such as DEN 431, DEN 438, DEN 439 (Olin Epoxy), epoxy-terminated prepolymers based on polysulfide and/or polythioether such as Thioplast EPS 35, Thioplast EPS 70 and Thioplast EPS 80 (Nouryon), epoxy-terminated reactive diluents based on alcohol/glycols such as 1,4-butanediol diglycidyl ether (DER 731; Olin Epoxy), and 1,6-hexanediol diglycidyl ether (DER 734; Olin Epoxy).

Preferably, the molar ratio of all constituents b1 to all thiol group containing poly(etherthioether) species as defined according to the invention present is in a range of from 0.90:1 to 2:1.

### Constituents b2

Constituent b2 is at least one metal oxide and/or metal peroxide, in particular manganese dioxide. Manganese dioxide means manganese (IV) oxide. Another suitable constituent b2 is, e.g., calcium peroxide.

Preferably, constituent b2 is present in component (B) of the sealing system in an amount in a range of from 30 to 90 wt.-%, based on the total weight of component (B). The rest exceeding 90 wt.-% preferably being one or more of the optional constituents as described herein after.

### Constituents b3

Constituent b3 is at least one organic peroxide. Examples of suitable organic peroxides are organic hydroperoxides such as cumenyl hydroperoxide.

Preferably, constituent b3 is present in component (B) of the sealing system in an amount in a range of from 30 to 100 wt.-%, based on the total weight of component (B).

### Constituents b4

Constituent b4 comprises two or more vinyl groups. Preferably, the vinyl groups are present in b4 as terminal groups. Constituent b4 can be monomeric, oligomeric or polymeric, and preferably is monomeric. Preferably, b4 is aliphatic and/or aromatic. Examples of constituent b4 are divinyl ethers such as diethyleneglycol divinyl ether, triethyleneglycol divinyl ether and butandiol divinyl ether.

Preferably, constituent b4 is present in component (B) of the sealing system in an amount in a range of from 30 to 100 wt.-%, based on the total weight of component (B).

If constituent b4 is used as constituent (b) of component (B), it preferably is present in combination with at least one radical generator. Examples of suitable radical generators are 1-hydroxycyclohexyl phenylketone and 2-hydroxy-2-methyl-1-phenylpropane-1-one.

### Constituents b5

Constituents b5 comprise two or more isocyanate groups (NCO groups). Constituent b5 can be monomeric, oligomeric or polymeric, and preferably is monomeric. Preferably, b5 is aliphatic and/or aromatic. Examples of constituent b5 are aliphatic or aromatic diisocyanates and/or their oligomers, such as their trimers like isocyanurate trimers; their biurets, uretdiones, and allophanates.

Preferably, constituent b5 is present in component (B) of the sealing system in an amount in a range of from 30 to 100 wt.-%, based on the total weight of component (B).

### Constituents optionally contained in Component (A) and/or Component (B)

Generally, the constituents described in the following may be constituents of components (A) and (B). In some cases, however, it is preferred that specific constituents are comprised only in component (A) or component (B), if contained at all. If this is the case, it will be mentioned in the following.

### Solvents optionally contained in the Sealing System (Water and/or Organic Solvents)

Each of the two components (A) and (B) of the sealing system may contain water and/or at least one organic solvent. However, it is also possible and even preferred if no organic solvents and/or water are present therein.

The amount of water present in component (A) preferably is less than 3.0 wt.-%, more preferably less than 2.0 wt.-%, even more preferably less than 1.0 wt.-%, still more preferably less than 0.5 wt.-%, in each case based on the total weight of component (A).

The amount of water present in component (B) depends on the kind of constituent b, which is suitable for hardening the sealant composition by at least partially inducing a chemical transformation of the thiol groups of the thiol group containing poly(ether-thioether) species.

The amount of water in component (B), when at least one constituent b1 and/or at least one constituent b3 and/or at least one constituent b4 is present in each case as constituent b in (B) preferably is less than 3.0 wt.-%, more preferably less than 2.0 wt.-%, even more preferably less than 1.0 wt.-%, still more preferably less than 0.5 wt.-%, in each case based on the total weight of component (B).

The amount of water present in component (B) when at least one constituent b2 such as manganese dioxide is present as constituent b in (B) preferably is less than 8.5 wt.-%, more preferably less than 7.5 wt.-%, even more preferably less than 7.0 wt.-%, still more preferably less than 6.0 wt.-%, in each case based on the total weight of component (B).

If at least one organic solvent is present therein, organic solvent(s) are preferably present in an amount of up to 70 wt.-% or up to 65 wt.-%, based on the total weight of the sealant composition, in particular when the sealant composition is a sprayable composition. In this case the sealant composition preferably includes an organic solvent(s) fraction of up to 60 wt.-%, based in each case on the total weight of the composition. Alternatively, if at least one organic solvent is present therein, in particular, when the sealant composition is not a sprayable composition, organic solvent(s) are preferably present in an amount of up to 10 wt.-%, based on the total weight of the sealant composition. The sealant composition in this case preferably includes an organic solvent(s) fraction of up to 7.5 wt.-%, more preferably of up to 5 wt.-%, based in each case on the total weight of the composition. All conventional organic solvents known to those skilled in the art can be used as organic solvents. The term "organic solvent" is known to those skilled in the art, in particular from Council Directive 1999/13 / EC of 11 March 1999. Examples of such organic solvents would include heterocyclic, aliphatic, or aromatic hydrocarbons, mono- or polyhydric alcohols, especially ethanol and/or propanol, ethers, esters, ketones, xylene, butanol, ethyl glycol and butyl glycol and also their acetates, butyl diglycol, diethylene glycol dimethyl ether, cyclohexanone, methyl ethyl ketone, methyl isobutyl ketone, acetone, isophorone, or mixtures thereof. The solvents present may be identical or different from one another. The term "organic solvents" as used herein does not encompass "reactive diluents" as defined herein below, since the organic solvents do not chemically react with other constituents of the sealing system.

### Fillers and/or Pigments optionally contained in the Sealing System

Component (A) of the sealing system may additionally contain - besides at least one thiol group containing poly(ether-thioether) species as defined herein above in formulae (Ia) and/or (lb) - at least one filler and/or at least one pigment.

The term "filler" is known to the skilled person, from DIN 55943 (date: October 2001), for example. A "filler" for the purposes of the present invention is preferably a constituent, which is substantially, preferably entirely, insoluble in the medium surrounding them, such as each of components (A) and (B) and the sealant composition, for example, and which is used in particular for adjusting the viscosity and thixotropy of the components and the sealant composition, for adjusting the specific density of the cured sealant and/or for increasing the mechanical properties of the cured sealant. "Fillers" in the sense of the present invention differ from "pigments" in their refractive index, which for fillers is < 1.7, while the refractive index for pigments is ≥ 1.7. Preferably, a "filler" for the purposes of the present invention is an inorganic and/or organic filler. Examples of inorganic fillers are chalk, talcum and aluminum hydroxide. Examples of organic fillers are powders prepared from temperature resistant polymers such as polyamides, polysulfones, polyphenylene sulfides, polyetherketones and polymeric hollow spheres.

Preferably, the amounts of fillers present in component (A) of the sealing system is in the range of from 0 to 55.0 wt.-%, more preferably in the range of from 0 to 50.0 wt.-%, even more preferably in the range of from 0 to 45.0 wt.-%, still more preferably in the range of from 0 to 40.0 wt.-%, yet more preferably in the range of from 0 to 35.0 wt.-% or of from 0 to 30.0 wt.-%, in particular in the range of from 0 to 25.0 wt.-%, in each case based on the total weight of component (A).

Preferably, the amounts of any pigments present in component (A) of the sealing system is in the range of from 0 to 35.0 wt.-%, more preferably in the range of from 0 to 30.0 wt.-%, even more preferably in the range of from 0 to 25.0 wt.-%, still more preferably in the range of from 0 to 20.0 wt.-%, yet more preferably in the range of from 0 to 15.0 wt.-%, in each case based on the total weight of component (A).

The term "pigment" is known to the skilled person from DIN 55943 (date: October 2001), for example. A "pigment" in the sense of the present invention refers preferably to components in powder or flake form which are substantially, preferably entirely, insoluble in the medium surrounding them, such as each of components (A) and (B) and the sealant composition, for example, and which is a colorant and/or substance which can be used as pigment on account of their magnetic, electrical and/or electromagnetic properties. Preferably, a "pigment" for the purposes of the present invention is an inorganic and/or organic pigment. An example of an inorganic pigment is titanium dioxide.

### Curing catalysts optionally contained in the Sealing System

Component (A) may additionally contain and preferably contains at least one curing catalyst, when component (B) of the sealing system comprises at least one constituent b1 comprising two or more epoxide groups as constituent b. Suitable curing catalysts are amines, in particular tertiary amines, amidines and/or guanidines. Examples are 1,4-diazabicyclo(2.2.2)octane, 1,5-diazabicyclo(4.3.0)non-5-ene (DBN) and 1,8-diazabicyclo(5.4.0)undec-7-ene (DBU).

When component (B) of the sealing system comprises at least one constituent b2 as constituent b, at least one curing catalyst is preferably present in component (B). Suitable curing catalysts in this case are, e.g., tetrabenzylthiuram disulfide, diphenylguanidine, and/or zinc bis(diethyldithiocarbamate).

When component (B) of the sealing system comprises at least one constituent b3 as constituent b, at least one curing catalyst is preferably present in component (B). A suitable curing catalyst in this case is, e.g., zinc diethyl carbamate.

When component (B) of the sealing system comprises at least one constituent b4 as constituent b, at least one curing catalyst is preferably present in component (B). Suitable curing catalysts in this case are in particular suitable photoinitiators such as acetophenones, benzoin ethers and/or benzoyl oximes. Curing preferably takes place via UV light.

### Further Constituents optionally contained in the Sealing System

Component (A) of the sealing system may optionally contain one or more further constituents, particularly preferred additives, more particular sealant additives, such as are commonly used in sealants:

### Flame Retardants as Further Constituents

The optional further constituent may be a flame retardant such as a phosphorous-containing flame retardant, in particular at least one phosphate ester. If a flame retardant is used, it preferably is liquid (at 1 bar and 23°C). In case a flame retardant is present in component (A), it is preferably present therein in an amount of greater than 0 wt.-%, such as 0.1 to 30.0 wt.-%, more preferably of 1.0 to 25.0 wt.-%, in particular of 5.0 to 20.0 wt.-%, based on the total weight of component (A).

Component (B) may additionally contain at least one flame retardant. The flame retardant may be a phosphorous-containing flame retardant, in particular at least one phosphate ester. If a flame retardant is used, it preferably is liquid (at 1 bar and 23°C). In case a flame retardant is present in component (B), it is preferably present therein in an amount of 5.0 to 65.0 wt.-%, more preferably of 25.0 to 65.0 wt.-%, in particular of 40.0 to 65.0 wt.-%, based in each case on the total weight of component (B).

### Light Stabilizers as Further Constituents

The optional further constituent may be a light stabilizer, in particular a UV stabilizer. Examples are for instance sterically hindered amines (HALS: hindered amine light stabilizer). In principle, all commercially available light stabilizers of the Tinuvin^{®} series or from other manufacturers can be used. Liquid light stabilizers are preferred. In case a light stabilizer is present in component (A), it is preferably present therein in an amount of 0.05 to 5.0 wt.-%, more preferably of 0.1 to 3.5 wt.-%, in particular of 0.1 to 2.0 wt.-%, based on the total weight of component (A).

### Adhesion Promoters as Further Constituents

The optional further constituent may be an additional adhesion promoter. In particular, organosilanes different from any of the other constituents can be used. Examples are e.g. (3-aminopropyl)trimethoxysilane, (3-aminopropyl)triethoxysilane, N-2-aminoethyl-3-aminopropyltrimethoxysilane, (3-mercaptopropyl)trimethoxysilane, (3-mercaptopropyl)triethoxysilane, (3-glycidyloxypropyl)trimethoxysilane and/or (3-glycidyloxypropyl)triethoxysilane, vinyltrimethoxysilane. Additionally, or alternatively, other adhesion promoters may be used, e.g., titanates and/or zirconates, such as titanium acetylacetonate (TAA) and/or Ti-n-butanolate (TnBt) and/or isopropyl titanate. In case an additional adhesion promoter is present in component (A), it is preferably present therein in an amount of 0.05 to 5.0 wt.-%, more preferably of 0.1 to 3.5 wt.-%, in particular of 0.1 to 2.0 wt.-%, based on the total weight of component (A).

### Further Additives as Further Constituents

The further optional constituent may also or additionally be an additive selected from the group consisting of defoamers, rheological additives, plasticizers such as phthalates, and viscosity reducers, as well as mixtures of such additives. In case at least one of the afore-mentioned additives is present in component (A), it is preferably present therein in an amount of 0.05 to 40.0 wt.-%, more preferably of 0.1 to 30.0 wt.-%, in particular of 0.1 to 20.0 wt.-%, based on the total weight of component (A). Specifically, in case at least one defoamer is present, its amount is preferably in the range of from 0.1 to 2.5 wt.-%, based on the total weight of component (A). Specifically, in case at least one reactive diluent is present, its amount is preferably in the range of from 0.1 to 20.0 wt.-%, based on the total weight of component (A). The term "reactive diluent" is herein used in accordance with its common meaning and denotes a diluent which by chemical reaction becomes part of the cured sealant composition. Specifically, in case at least one rheological additive is present, its amount is preferably in the range of from 0.1 to 5.0 wt.-%, based on the total weight of component (A). Specifically, in case at least one plasticizer is present, its amount is preferably in the range of from 0.1 to 2.5 wt.-%, based on the total weight of component (A). Specifically, in case at least one viscosity reducer is present, its amount is preferably in the range of from 0.1 to 20.0 wt.-%, based on the total weight of component (A).

Component (B) of the sealing system may additionally or alternatively contain one or more additive selected from the group consisting of reactive diluents such as such as bisoxazolidines and/or aldimines, and plasticizers such as phthalates. Preferably, at least one plasticizer constituent is present in component (B), when component (B) of the sealing system comprises at least one constituent b2, in particular manganese dioxide. Specifically, in case at least one reactive diluent is present, its amount is preferably in the range of from 0.1 to 20.0 wt.-%, based on the total weight of component (B). Specifically, in case at least one plasticizer is present, its amount is preferably in the range of from 10.0 to 70.0 wt.-%, based on the total weight of component (B).

### Sealant composition

A further subject-matter of the present invention is a sealant composition, which is obtainable by mixing components (A) and (B) of the inventive sealing system with each other.

The obtained sealant composition may be sprayable, but does not have to be.

Preferably, the sealant composition is obtainable by mixing components (A) and (B) in a weight ratio (component (A)/component (B)) in the range of from 100:1 to 1:1. More preferably, mixing is performed in a weight ratio in the range of from 100:1 to 1.1:1, even more preferably in a weight ratio in the range of from 100:1 to 2:1, in particular in a weight ratio in the range of from 100:1 to 3:1, most preferred in a weight ratio in the range of from 20:1 to 4:1.

All preferred embodiments described above herein in connection with the inventive method, the inventive polymers and the inventive sealing system and the preferred embodiments thereof, are also preferred embodiments of the inventive sealant composition.

### Sealing method

A further subject-matter of the present invention is a method of sealing an optionally pre-coated substrate comprising at least a step of applying an inventive sealant composition at least in portion onto a surface of an optionally pre-coated substrate, wherein the optionally pre-coated substrate preferably is a substrate utilizable in the aerospace and/or aircraft industry.

All preferred embodiments described above herein in connection with the inventive method, the inventive polymers and the inventive sealing system and sealant composition, and the preferred embodiments thereof, are also preferred embodiments of the inventive sealing method.

The substrate may be optionally pre-coated. For example, it may already bear a primer film at least in portion on its surface. The substrates used may additionally or alternatively be subjected to a pretreatment leading to another pre-coating. For example, an epoxy-based coating may be applied and the substrates used bear at least one preferably cured coating layer such as an epoxy-based coating layer.

Suitable substrates are metallic substrates, but also plastic substrates such as polymeric substrates and/or fiber-based composites can be used. Preferred substrates are substrates utilizable in the aerospace and/or aircraft industry such as fuel tanks. Preferably, the surface to be sealed in this case is the inner surface of a fuel tank.

Suitable as metallic substrates used in accordance with the invention are all substrates used customarily and known to the skilled person. The substrates used in accordance with the invention are preferably metallic substrates including steel substrates and titanium substrates. Most preferred, however, are aluminum and/or aluminum alloy substrates.

Preferably, thermoplastic polymers are used in case the substrates are plastic substrates. Suitable polymers are poly(meth)acrylates including polymethyl(meth)acrylates, polybutyl (meth)acrylates, polyethylene terephthalates, polybutylene terephthalates, polyvinylidene fluorides, polyvinyl chlorides, polyesters, including polycarbonates and polyvinyl acetate, polyamides, polyolefins such as polyethylene, polypropylene, polystyrene, and also polybutadiene, polyacrylonitrile, polyacetal, polyacrylonitrile-ethylene-propylene-diene-styrene copolymers (A-EPDM), ASA (acrylonitrile-styrene-acrylic ester copolymers) and ABS (acrylonitrile-butadiene-styrene copolymers), polyetherimides, phenolic resins, urea resins, melamine resins, alkyd resins, epoxy resins, polyurethanes, including TPU, polyetherketones, polyphenylene sulfides, polyethers, polyvinyl alcohols, and mixtures thereof. Polycarbonates and poly(meth)acrylates are especially preferred.

However, as outlined above fiber-based composites such as carbon fiber composites may also be used as substrates.

Preferably, the inventive sealing method further comprises a curing step, namely curing at least the sealant composition applied at ambient temperature (18 to 23°C) or at an elevated temperature such as 80 °C for 0.5 hours to 14 days. Preferably, curing means chemical curing such as chemical crosslinking, at ambient temperature or at an elevated temperature. In case of using at least one constituent b1 or b4 as constituent b, curing may additionally or alternatively be induced via UV light.

Preferably, the sealant composition is applied in a dry layer thickness in the range of from 15 µm to 20 mm, more preferably of from 50 µm to 15 mm, in particular of from 0.5 to 10 mm.

### Sealed substrate

A further subject-matter of the present invention is a sealed substrate, obtainable by the inventive method.

All preferred embodiments described herein above in connection with the inventive method, the thiol group containing poly(ether-thioether) according to the invention and the inventive sealing system and sealant composition as well as the inventive sealing method, and the preferred embodiments thereof, are also preferred embodiments of the inventive sealed substrate.

### Use of the sealing system

Yet another subject-matter of the invention is the use of the (unmixed) sealing system according to the invention or of the sealant composition (i.e., mixed sealing system) according to the invention for providing a sealing at least in portion onto a surface of an optionally pre-coated substrate, which is utilizable in the aerospace and/or aircraft industry. Thus, the aforementioned use is the use of an unmixed or mixed sealing system according to the invention for providing a sealing at least in portion onto a surface of an optionally pre-coated substrate, which is utilizable in the aerospace and/or aircraft industry.

In the following the invention is exemplified by working examples.

### EXPERIMENTAL PART

### METHODS

### Glass Transition Temperature T_{g}

The T_{g} was determined by DMTA (dynamic-mechanical-thermo-analysis) measurements. DMTA measurements were performed with a GABO Qualimeter and the software Eplexor 8.375. The following measurement parameters were applied: measuring frequency: 10 Hz, Heating rate: 2K/min; Temperature range: -50 / -50 °C to +30°C. Samples with a thickness of 3 mm, a width of 10 mm and a length of 35 to 40 mm were tested in the tension mode. Prior to the measurement the samples were cured for 14 days at 23 °C at 50% relative humidity. The T_{g}-peak is defined as the temperature where the tan δ has its maximum. The T_{g}-onset is defined as the temperature intersection of extrapolated tangents drawn from points on the curve before and after the drop of the storage modulus E'.

### Weight-Average Molecular Weight M_{w} and Number-average Molecular Weight Mₙ

The average molecular weights (M_{w} and Mₙ) were determined by gel permeation chromatography (GPC). The results are averages from duplicate injections of samples and are determined relative to the polystyrene (PS) standards.

### Parameters:

| | |
|---|---|
| Column set | PLgel 5µ Guard and (1000, 500 and 100 Å) columns at 40 °C |
| Mobile phase | THF (UV grade) |
| Flow rate | 1.0 mL/min |
| Sample injection | 100 uL of 2 mg/mL |
| Detectors | Differential Refractometer at 38°C |
| Standards | Polystyrene [PS-1 A & B; Mp = 6570000 to 580 Daltons, and PS 162) |

### Hydroxy content

The hydroxy content (OH content) was determined according to DIN IN ISO 4692-2.

### Thiol content

The thiol content (SH content) in wt.-% is determined via titration. The terminal SH-groups are oxidized by iodine to disulfide groups. The SH content can be then calculated from the iodine consumption.

### EXAMPLES

### Preparation of an allyl group terminated poly(ether-thioether)

A number of exemplary polymer structures were synthesized consisting of (1) a beta-hydroxy sulfide, thiodiglycol (TDG), (2) a branched dihydric monomer, 2-methyl-1,3-propane diol (MPD), and (3) a monohydric diallyl monomer, trimethylolpropane diallyl ether (TMP DAE).

### Para-toluene sulfonic acid catalyzed synthesis of an allyl group terminated poly(etherthioether)

A round bottomed reaction flask was equipped with a nitrogen inlet, thermocouple, mechanical stirrer, and Dean-Stark apparatus. Monomers and catalyst (according to Table 1) were added to the flask and refluxed in 200 g xylenes for 6 hours. The distillate was collected in the Dean-Stark trap with the water settling and the excess xylene returned to the flask. Solvent was stripped *in vacuo* and resultant polymers were analyzed via GPC and their hydroxyl values were determined. The hydroxy values in Table 1 were determined without separating the para-toluene sulfonic acid from the reaction mixture.

**Table 1-Monomer ratios and analysis PTSA catalyzed polymers**

| Sample | TDG | MPD | TMP DAE | PTSA | M_{w} | Mₙ | OH value |
|---|---|---|---|---|---|---|---|
| 1 | 97.88 g | 18.06 g | 21.42 g | 8.76 g | 2500 | 1300 | 3.86 |
| 2 | 97.92 g | 18.10 g | 21.40 g | 8.88 g | 2650 | 1340 | 7.80 |
| 3 | 98.00 g | 18.07 g | 21.54 g | 8.81 g | 2540 | 1320 | 7.34 |

- TDG:: thiodiglycol
- MPD:: methylpropane diol
- TMP DAE:: trimethylolpropane diallylether
- PTSA:: para-toluene sulfonic acid

### Phosphorous acid catalyzed synthesis of an allyl group terminated poly(ether-thioether)

A 500 mL 4-necked was equipped with a nitrogen inlet, thermocouple, and Dean-Stark apparatus. TDG (138.34 grams), MPD (25.56 grams), TMP DAE (34.85 grams), thiodiphenol (0.41 grams), and 50% phosphorous acid in water (2.18 grams) were added to flask. Monomers were reacted at 190°C for eight hours at which point 3.05 grams additional 50% phosphorous acid in water were added and reacted at 190°C for six more hours. Hydroxyl value was determined to be 7.57 mg KOH/g. GPC for sample determined M_{w} and Mₙ to be 7160 Da and 2190 Da, respectively.

### Preparation of thiol group containing poly(ether-thioether)

A number of exemplary thiol group containing poly(ether-thioether)s were synthesized by reaction of unsaturation of above polymers with 1,2-ethanedithiol.

### Thiol-ene reaction with para-toluene sulfonic acid catalyzed synthesis of an allyl group terminated poly(ether-thioether)

A round bottomed reaction flask was equipped with a nitrogen inlet, thermocouple, and mechanical stirrer. PTSA catalyzed polymer was added to vessel along with ethanedithiol, 2,2'-azobis(2-methylpropionitrile), and toluene according to Table 2. System was reacted for 5 hours at 95°C before concentrating polymer *in vacuo* and analyzed.

**Table 2-Thiol-ene reaction product of PTSA catalyzed polymer**

| Examples | PTSA polymer | Ethane dithiol | AIBN | Toluene | M_{w} | Mₙ | % SH |
|---|---|---|---|---|---|---|---|
| E1 | 20.20 g | 16.80 g | 0.20 g | 90 mL | 3240 | 1180 | 4.61 |
| E2 | 50.04 g | 8.93 g | 0.56 g | 100 mL | 4900 | 1190 | 4.10 |
| E3 | 60.04 g | 30.44 g | 0.62 g | 300 mL | 2430 | 1060 | 3.40 |

### Thiol-ene reaction with phosphorous acid catalyzed synthesis of an allyl group terminated poly(ether-thioether) (Example E4)

A round bottomed reaction flask was equipped with a nitrogen inlet, thermocouple, and mechanical stirrer. Phosphorous acid catalyzed polymer (110 grams) was added to vessel along with ethanedithiol (104.95 grams), 2,2'-azobis(2-methylpropionitrile) (1.0 grams), and toluene (100 grams). System was reacted for 5 hours at 95°C before concentrating polymer in vacuo. The resulting polymer was analyzed via GPC (M_{w}= 6870 Da, Mₙ=1520 Da) and thiol content was determined to be 5.11% SH.

### Preparation of sealant compositions

A number of exemplary sealant compositions were prepared. Each of the sealant compositions was prepared from mixing two components (A) and (B) of a two-component sealing system with each other.

### 1. Sealant example S-1a

The composition of component (A) of sealing system S-1a is given in Table 3. Component (A) is prepared from mixing the constituents listed in Table 3 with each other in the order given in Table 3.

**Table 3 - Composition of the "A"-component**

| *Constituent* | *Amount [g]* |
|---|---|
| E1 | 4.00 |
| Amine catalyst | 0.14 |

| | |
|---|---|
| Dabco 33 LV was used as amine catalyst. | |

4.14 g of component "A" was mixed with a hardener component "B." Component (B) is prepared from mixing the commercially available epoxy resins listed in Table 4 with each other in the order given in Table 4.

**Table 4 - Composition of the "B"-component**

| *Constituent* | *Amount [g]* |
|---|---|
| Novolac DEN 431 | 0.56 |
| Bisphenol A DER 331 | 0.56 |

### 2. Sealant example S-1b

The composition of component (A) of sealing system S-1b is given in Table 5. Component (A) is prepared from mixing the constituents listed in Table 5 with each other in the order given in Table 5.

**Table 5 - Composition of the "A"-component**

| *Constituent* | *Amount [g]* |
|---|---|
| E2 | 4.00 |
| Amine catalyst | 0.13 |

| | |
|---|---|
| Dabco 33 LV was used as amine catalyst. | |

4.13 g of component "A" was mixed with a hardener component "B." Component (B) is prepared from mixing the commercially available epoxy resins listed in Table 6 with each other in the order given in Table 6.

**Table 6 - Composition of the "B"-component**

| *Constituent* | *Amount [g]* |
|---|---|
| Novolac DEN 431 | 0.41 |
| Bisphenol A DER 331 | 0.41 |

### 3. Sealant example S-1c

The composition of component (A) of sealing system S-1c is given in Table 7. Component (A) is prepared from mixing the constituents listed in Table 7 with each other in the order given in Table 7.

**Table 7 - Composition of the "A"-component**

| *Constituent* | *Amount [g]* |
|---|---|
| E3 | 4.00 |
| Amine catalyst | 0.14 |

| | |
|---|---|
| Dabco 33 LV was used as amine catalyst. | |

4.14 g of component "A" was mixed with a hardener component "B". Component (B) is prepared from mixing the commercially available epoxy resins listed in Table 8 with each other in the order given in Table 8.

**Table 8 - Composition of the "B"-component**

| *Constituent* | *Amount [g]* |
|---|---|
| Novolac DEN 431 | 0.50 |
| Bisphenol A DER 331 | 0.50 |

### 4. Sealant example S-1d

The composition of component (A) of sealing system S-1d is given in Table 9. Component (A) is prepared from mixing the constituents listed in Table 9 with each other in the order given in Table 9.

**Table 9 - Composition of the "A"-component**

| *Constituent* | *Amount [g]* |
|---|---|
| E4 | 4.00 |
| Amine catalyst | 0.14 |

| | |
|---|---|
| Dabco 33 LV was used as amine catalyst. | |

4.14 g of component "A" was mixed with a hardener component "B." Component (B) is prepared from mixing the commercially available epoxy resins listed in Table 10 with each other in the order given in Table 10.

**Table 10 - Composition of the "B"-component**

| *Constituent* | *Amount [g]* |
|---|---|
| Novolac DEN 431 | 0.53 |
| Bisphenol A DER 331 | 0.53 |

After each of the afore-mentioned components "A" had been mixed with component "B" using a speed mixer, the resulting mixture was then poured into a Teflon molding and the resulting sealant compositions were cured for 14 days within the moldings at room temperature (23 °C) and 50% relative humidity. The resulting test specimen were then subjected to the following test as it will be outlined hereinafter.

### Investigation of properties of sealed substrates

Some properties of some of the sealed and cured substrates have been investigated. The measurements have been performed according to the methods disclosed in the 'methods' section. The results are displayed in Table 11.

**Table 11**

| | *Sealant S-1a* | *Sealant S-1b* | *Sealant S-1c* | *Sealant S-1d* |
|---|---|---|---|---|
| T_{g} onset, DMTA [°C] | -48 | -51 | -49 | -50 |
| T_{g} peak, DMTA [°C] | -32 | -35 | -31 | -34 |

## Claims

1. A composition comprising thiol group containing poly(ether-thioether) species having the general structures
[H(S-R¹)ₚ-S-(CH₂)ᵣ-O]ₘ-R²-O-[R³-(S)ₛ-R⁴-O]-[R⁵-O]ₙ-R⁶ _{(Ia)}
and/or 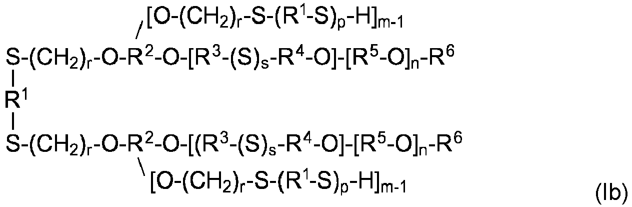 wherein,
if residues R¹, R², R³, R⁴, R⁵, R⁶ and R^{a} and the integers denoted n, m, p, r, s, t, y and z occur more than one time in a species of formula (Ia) and/or (Ib), those residues and integers are selected independently of each other with the following provisos:
R¹ is an aliphatic or aromatic divalent organic residue, wherein R¹ is attached to the adjacent S atoms by carbon atoms, and R¹, besides hydrogen atoms and carbon atoms, optionally comprises one or more heteroatoms selected from O, S, N and halide;
R² is an aliphatic or aromatic (m+1)-valent organic residue, with m = 2 or 3, wherein residue R² is attached to the adjacent O atoms by carbon atoms; and
R², besides hydrogen atoms and carbon atoms, optionally comprises one or more heteroatoms selected from O, S, N and halides;
R³ and R⁴ are divalent residues (CHR^{a})ₜ with t = 2 to 4, wherein residues R^{a} are selected from H and hydrocarbyl groups comprising 1 to 12, preferably 1 to 8, more preferred 1 to 6 and most preferred 1 to 4 carbon atoms;
y of the n residues R⁵ are branched divalent hydrocarbon residue comprising 4 to 20, preferably 4 to 15, and more preferably 4 to 10 carbon atoms, with y being ≥ 1;
z of the n residues R⁵ are residues R³-(S)ₛ-R⁴, z being ≥ 1; with n = y + z; and n independently of each other being a number in the range from 2 to 200, preferably 2 to 150, more preferably 2 to 100;
R⁶ is H in case R⁵ is a branched divalent hydrocarbon residue comprising 4 to 20, preferably 4 to 15, and more preferably 4 to 10 carbon atoms, or
R⁶ is H or R²-[O-(CH₂)ᵣ-S-R¹-SH]ₘ in case R⁵ being a residue R³-(S)ₛ-R⁴; and
p = 0 or 1, preferably p = 1;
r = 2 or 3, preferably r = 3; and
s = 1 to 8, preferably s = 1, or 2 to 8, such as 3 to 6.

2. The composition according to claim 1, being liquid at a temperature of 23 °C and a pressure of 101.3 kPa.

3. The composition according to claim 1 or 2, **characterized in that** z ≥ y.

4. The composition according to any one or more of the preceding claims, wherein m = 2, t = 2, p = 1, r = 3, and s = 1 or s = 2 to 8.

5. The composition according to any one of claims 1 to 4, **characterized in that** the SH content of the thiol group containing poly(ether-thioether) species of formulae (Ia) and (Ib). is in the range from 1 to 10 wt.-% based on the total weight of the thiol group containing poly(ether-thioether) species of formulae (Ia) and (Ib).

6. A method for producing a composition containing thiol group containing poly(etherthioether) species as defined in formulae (Ia) and/or (Ib) of any one or more of claims 1 to 5, comprising two steps (i) and (ii), wherein in
step (i) at least one compound of formula HO-R³-(S)ₛ-R⁴-OH; at least one compound of formula HO-R⁵-OH, wherein R⁵ is a branched divalent hydrocarbon residue comprising 4 to 20, preferably 4 to 15, and more preferably 4 to 10 carbon atoms; and at least one compound of formula HO-R²-[O(CH₂)ⱼCH=CH₂]ₘ (II) are reacted to form a vinyl group and/or allyl group terminated poly(ether-thioether) species, wherein R², R³, R⁴ and R⁵ and the values of s and m are defined as in formulae (Ia) and (Ib) of any one or more of claims 1 to 5, and j = 0 or 1, the m values for integer) being same or different, preferably being same; followed by
step (ii) wherein the vinyl group and/or the allyl group terminated poly(ether-thioether) species obtained in step (i) are reacted with an inorganic hydrogen sulfide and/or an organic dithiol of formula HS-R¹-SH, wherein R¹ is defined as for the thiol group containing poly(ether-thioether) species of formulae (Ia) and/or (Ib), thus obtaining the composition comprising thiol group containing poly(ether-thioether) species according any one or more of claims 1 to 5.

7. A poly(ether-thioether) species having the general structure (II)
[CH₂=CH-(CH₂)ⱼ-O]ₘ-R²-O-[R³-(S)ₛ-R⁴-O]-[R⁵-O]ₙ-R⁶ (II)
wherein
R², R³, R⁴, R⁵, n, m and s are defined as in in the preceding claims,
R⁶ being H in case R⁵ is a branched divalent hydrocarbon residue comprising 4 to 20, preferably 4 to 15, and more preferably 4 to 10 carbon atoms, or
R⁶ being H or R²-[O-(CH₂)ⱼ-CH=CH₂]ₘ in case R⁵ being a residue R³-(S)ₛ-R⁴; and
j = 0 or 1, and the m values for integer) being same or different, preferably being same.

8. A method of producing the allyl group terminated poly(ether-thioether) according to claim 6, the method comprising or consisting of step (i) of claim 6.

9. A two-component (2K) sealing system comprising components (A) and (B) which are separate from each other, wherein component (A) of the sealing system comprises at least one composition comprising thiol group containing poly(ether-thioether) species as defined in one or more of claims 1 to 5, or obtainable by the method according to claim 6, and wherein component (B) of the sealing system comprises at least one constituent b, which is suitable for hardening the sealant composition by at least partially inducing a chemical transformation of the at least part of the thiol groups of the thiol group containing poly(ether-thioether).

10. The sealing system according to claim 9, **characterized in that** the at least one constituent b, which is present in component (B) and is suitable for hardening the sealant composition, is selected from the group consisting of
constituents b1 comprising two or more epoxide groups
constituents b2, being metal oxides and/or metal peroxides, in particular manganese dioxide,
constituents b3, which are organic peroxides,
constituents b4 comprising two or more vinyl groups; and
constituents b5 comprising two or more isocyanate groups.

11. A sealant composition, which is obtainable by mixing components (A) and (B) of a sealing system as defined in claim 9 or 10 with each other.

12. A method of sealing an optionally pre-coated substrate comprising at least a step of applying a sealant composition as defined in claim 11 at least in portion onto a surface of an optionally pre-coated substrate, wherein the optionally pre-coated substrate preferably is a substrate utilizable in the aerospace and/or aircraft industry.

13. A sealed substrate, obtainable by the method according to claim 12.

14. A use of the sealing system according to one or more of claims 9 and 10 or of the sealant composition according to claim 11 for providing a sealing at least in portion onto a surface of an optionally pre-coated substrate, which is utilizable in the aerospace and/or aircraft industry.
